# EUROPÄISCHE PATENTSCHRIFT

(11) **EP 0 470 113 B1**
(45) Veröffentlichungstag und Bekanntmachung des Hinweises auf die Patenterteilung: **10.02.1993**
(21) Anmeldenummer: 90906203.6
(22) Anmeldetag: 18.04.1990
(51) Int. Cl.: F01N 3/28, B01D 53/36

(54) **IN EINER TRENNWAND BEFESTIGTER METALLISCHER KATALYSATOR-TRÄGERKÖRPER**
METALLIC CATALYST SUPPORT MOUNTED IN A SEPARATING WALL
SUPPORT METALLIQUE POUR CATALYSEUR MONTE DANS UNE PAROI DE SEPARATION

(30) Priorität: 28.04.1989 DE 8905415 U
(43) Veröffentlichungstag der Anmeldung: 12.02.1992
(73) Patentinhaber: Emitec Gesellschaft für Emissionstechnologie mbH, 53797 Lohmar (DE)
(72) Erfinder: WIERES, Ludwig, D-5063 Overath 1 (DE)
(74) Vertreter: Kahlhöfer, Hermann, Dipl.-Phys.
(86) Internationale Anmeldenummer: EP9000624
(87) Internationale Veröffentlichungsnummer: WO9013736

(56) Entgegenhaltungen:
- EP-A- 0 245 738
- DE-A- 3 829 668
- DE-U- 8 807 068
- US-A- 3 597 165
- US-A- 4 206 177
- US-A- 4 248 833

## Beschreibung

### In einer Trennwand befestigter metallischer Katalysator-Trägerkörper

Die vorliegende Erfindung betrifft einen wabenförmigen metallischen Katalysator-Trägerkörper, welcher eine Vielzahl von einem Fluid durchströmbarer Kanäle aufweist und von einem metallischen Mantelrohr umgeben ist. Solche Körper sind beispielsweise aus der EP-C-0 049 489, der EP-C-0 121 174, der EP-C-0 121 175, der EP-A-0 245 737 oder der EP-A-0 245 738 bekannt.

Bekannt ist es z.B. aus der -nicht vorveröffentlichten- DE-A-3829668 oder aus der US-A-3597165 auch, solche Katalysator-Trägerkörper mit relativ kleinen Dimensionen zur Abgasreinigung bei Kleinmotoren, beispielsweise für Motorsägen, Rasenmäher oder dergleichen, einzusetzen. Bei solchen Anordnungen müssen die Katalysator-Trägerkörper oft aus Platzgründen in einer Trennwand in einer topfförmigen Erweiterung des Abgassystems angeordnet werden, wobei die topfförmige Erweiterung gleichzeitig eine schalldämpfende Funktion hat.

Bei metallischen Wabenkörpern stellt die haltbare Einbindung eines Wabenkörpers in eine etwa senkrecht oder im Winkel zu dessen Durchströmungsrichtung verlaufende Trennwand ein fertigungstechnisches Problem dar. Einerseits soll der Katalysator-Trägerkörper möglichst dicht in der Trennwand sitzen, was geringe Fertigungstoleranzen verlangt und andererseits kann bei einer Schweißverbindung zwischen Mantelrohr und Trennwand die im Inneren des Mantelrohres liegende sehr feine metallische Trägerstruktur beschädigt werden, was eine Verringerung der Lebensdauer des ganzen Systems zur Folge haben kann. Bei der Fertigung mußten daher bisher hohe Anforderungen an die Maßhaltigkeit, die Schweißparameter und die Handhabung gestellt werden.

Für große Katalysator-Trägerkörper ist es weiter bereits bekannt, das Mantelrohr aus Stabilitätsgründen mit mindestens einer umlaufenden Ausbördelung oder Außensicke zu versehen. Für die Einbindung in ein Abgassystem waren solche Ausbördelungen jedoch bisher ohne Einfluß.

Aufgabe der vorliegenden Erfindung ist die Schaffung eines in einer Trennwand befestigten metallischen Katalysator-Trägerkörpers, dessen Herstellung fertigungstechnisch leicht beherrschbar ist und dessen Lebensdauer durch Schwankungen der Fertigungsparameter nicht beeinflußt wird.

Diese Aufgabe löst erfindungsgemäß ein von einem Fluid durchströmbarer, wabenförmiger metallischer Katalysator-Trägerkörper mit einem diesen umgebenden Mantelrohr, eingesetzt in eine Öffnung in einer etwa senkrecht zur Durchströmungsrichtung verlaufenden Trennwand, mit folgenden Merkmalen:
a) das Mantelrohr weist mindestens eine umlaufende Ausbördelung auf;
b) die Öffnung in der Trennwand ist geringfügig größer als die Außenmaße des Mantelrohres im nicht ausgebördelten Bereich;
c) die Öffnung in der Trennwand ist kleiner als die Außenmaße der Ausbördelung des Mantelrohres;
d) die Trennwand liegt an der Ausbördelung an und ist mit deren äußerem Bereich durch eine umlaufende Schweißnaht oder eine Mehrzahl von Schweißstellen verbunden.

Ein mit einer Ausbördelung versehener Katalysator-Trägerkörper läßt sich leicht in eine Öffnung in einer Trennwand einschieben, wenn diese geringfügig größer als die Außenmaße des Mantelrohres im nicht ausgebördelten Bereich ist. Geringfügige Toleranzen spielen hierbei keine Rolle. Wenn gleichzeitig die Öffnung in der Trennwand kleiner als die Außenmaße der Ausbördelung des Mantelrohres ist, kann der Katalysator-Trägerkörper immer bis zum Anschlagen der Ausbördelung an die Trennwand herangeschoben werden. Dort ist dann eine problemlose Verschweißung der an der Ausbördelung anliegenden Trennwand mit dem äußeren Bereich der Ausbördelung möglich. Dies kann durch eine umlaufende Schweißnaht erfolgen oder aber auch durch eine Mehrzahl von Schweißpunkten oder eine sogenannte Steppnaht. Selbst wenn keine umlaufende Schweißnaht gewählt wird, ergibt sich doch ein relativ dichter Einbau des Katalysator-Trägerkörpers in die Trennwand, da praktisch-keine Zwischenräume zwischen Ausbördelung und Trennwand verbleiben. Gleichzeitig kann die Verschweißung des äußeren Bereiches der Ausbördelung mit der Trennwand keine Beschädigungen an der feinen metallischen Struktur im Inneren des Katalysator-Trägerkörpers hervorrufen, selbst dann nicht, wenn durch ungünstige Wahl der Schweißparameter das Mantelrohr bis zu seiner Innenseite aufgeschmolzen wird.

Die vorliegende Erfindung eignet sich besonders für Trägerkörper mit einem runden Querschnitt und einem Durchmesser von etwa 3 bis 8 cm, wie sie für die Abgasreinigung bei Kleinmotoren, insbesondere auch bei Zweitaktmotoren, vorgesehen werden. Entsprechendes gilt für die axiale Länge der Katalysator-Trägerkörper, deren für die Anwendung der Erfindung günstiger Bereich bei etwa 3 bis 8 cm liegt. Körper mit diesen Maßen lassen sich stabil in einer Trennwand befestigen.

Von den jeweiligen Einbaubedingungen hängt es ab, ob die Ausbördelung bevorzugt etwa in der Mitte des Katalysator-Trägerkörpers, d. h. in etwa gleichem Abstand von beiden Stirnseiten angeordnet wird, oder aber unsymmetrisch in bezug auf die beiden Stirnseiten. Im letzteren Falle sollte die Ausbördelung bevorzugt in einem Abstand von etwa 1 bis 4 cm von einer Stirnseite angeordnet werden.

Für die Belastung der Schweißnaht kann es eine Rolle spielen, von welcher Seite der Trennwand aus der Katalysator-Trägerkörper angeströmt wird. Günstig ist es, wenn die Anströmseite des Katalysator-Trägerkörpers auf der der Schweißnaht zugewandten Seite der Trennwand liegt, da dann die Schweißnaht nicht auf Zug belastet wird, wodurch Beschädigungen nach längerer Belastung vermieden werden.

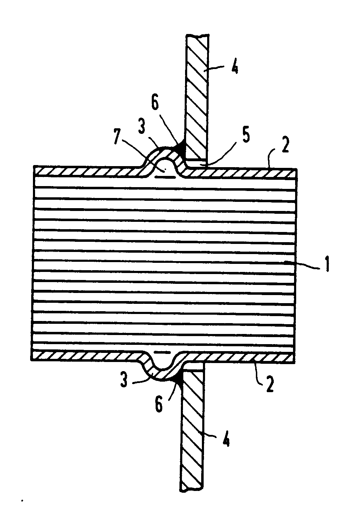

Ein Ausführungsbeispiel der Erfindung ist in der Zeichnung dargestellt. Die Erfindung beschränkt sich jedoch nicht auf dieses Ausführungsbeispiel, sondern erfaßt auch nicht dargestellte Abwandlungen.

Die Zeichnung zeigt einen metallischen Katalysator-Trägerkörper 1 mit einem Mantelrohr 2, welches eine umlaufende Ausbördelung 3 aufweist, die z. B. ca. 1 - 5 mm aus der übrigen Außenfläche des Mantelrohres herausragt. Das Mäntelrohr 2 ist bis zum Anschlag der Ausbördelung 3 in eine Öffnung 5 einer Trennwand 4 eingesetzt, wobei die Öffnung 5 geringfügig größer, z. B. etwa 0,5 - 2 mm, als die Außenmaße des Mantelrohres 2 und kleiner als die Außenmaße der Ausbördelung 3 ist. Durch eine umlaufende Schweißnaht 6 oder einzelne Schweißpunkte 6 sind Trennwand und Außenbereich der Ausbördelung t miteinander verbunden. Wegen des Zwischenraumes 7 zwischen dem Außenbereich der Ausbördelung 3 und dem Katalysator-Trägerkörper 1 wird dieser bei Herstellung der Schweißnaht 6 nicht beschädigt, was eine Beeinträchtigung der Lebensdauer durch die Art des Einbaus ausschließt.

Die vorliegende Erfindung eignet sich besonders für die Abgasreinigung von Kleinmotoren, ist jedoch nicht auf diese Anwendungsfälle beschränkt.

## Patentansprüche

1. Von einem Fluid durchströmbarer, wabenförmiger metallischer Katalysator-Trägerkörper (1) mit einem diesen umgebenden Mantelrohr (2), eingesetzt in eine Öffnung (5) in einer etwa senkrecht zur Durchströmungsrichtung verlaufenden Trennwand (4), **gekennzeichnet durch** folgende Merkmale:
a) das Mantelrohr (2) weist mindestens eine umlaufende Ausbördelung (3) auf;
b) die Öffnung (5) in der Trennwand (4) ist geringfügig größer als die Außenmaße des Mantelrohres (2) im nicht ausgebördelten Bereich;
c) die Öffnung (5) in der Trennwand (4) ist kleiner als die Außenmaße der Ausbördelung (3) des Mantelrohres;
d) die Trennwand (4) liegt an der Ausbördelung (3) an und ist mit deren äußerem Bereich durch eine umlaufende Schweißnaht (6) oder eine Mehrzahl von Schweißstellen (6) verbunden.

2. Katalysator-Trägerkörper nach Anspruch 1, **dadurch gekennzeichnet,** daß der Katalysator-Trägerkörper einen runden Querschnitt und einen Durchmesser von etwa 3 bis 8 cm hat.

3. Katalysator-Trägerkörper nach Anspruch 1 oder 2, **dadurch gekennzeichnet**, daß der Katalysator-Trägerkörper (1) eine axiale Länge von etwa 3 bis 8 cm hat.

4. Katalysator-Trägerkörper nach Anspruch 1, 2 oder 3, **dadurch gekennzeichnet**, daß die Ausbördelung (3) etwa gleichen Abstand von beiden Stirnseiten des Katalysator-Trägerkörpers (1) hat.

5. Katalysator-Trägerkörper nach Anspruch 1, 2 oder 3, **dadurch gekennzeichnet**, daß die Ausbördelung (3) unsymmetrisch in bezug auf die beiden Stirnseiten des Katalysator-Trägerkörpers (1) angeordnet ist, vorzugsweise mit einem Abstand von etwa 1 bis 4 cm von einer Stirnseite entfernt.

6. Katalysator-Trägerkörper nach einem der vorhergehenden Ansprüche, **dadurch gekennzeichnet**, daß die Anströmseite des Katalysator-Trägerkörpers (1) auf der der Schweißnaht (6) zugewandten Seite der Trennwand (4) liegt.

## Claims

1. A honeycombed metal catalyst carrier body (1) through which a fluid can flow, having a casing tube (2) surrounding it, fitted into an opening (5) in a dividing wall (4) which extends substantially perpendicularly to the through-flow direction, characterised by the following features:
a) the casing tube (2) has at least one outward bead configuration (3) extending therearound;
b) the opening (5) in the dividing wall (4) is slightly larger than the outside dimensions of the casing tube (2) in the region without the bead configuration;
c) the opening (5) in the dividing wall (4) is smaller than the outside dimensions of the bead configuration (5) of the casing tube; and
d) the dividing wall (4) bears against the bead configuration (3) and is connected to the outer region thereof by a welded seam (6) extending therearound or a plurality of welds (6).

2. A catalyst carrier body according to claim 1 characterised in that the catalyst carrier body is of a round cross-section and has a diameter of about 3 to 8 cm.

3. A catalyst carrier body according to claim 1 or claim 2 characterised in that the catalyst carrier body (1) is of an axial length of about 3 to 8 cm.

4. A catalyst carrier body according to claim 1, claim 2 or claim 3 characterised in that the bead configuration (3) is at approximately the same spacing from both ends of the catalyst carrier body (1).

5. A catalyst carrier body according to claim 1, claim 2 or claim 3 characterised in that the bead configuration (3) is arranged asymmetrically with respect to the two ends of the catalyst carrier body (1), preferably being disposed at a spacing of from about 1 to 4 cm from one end.

6. A catalyst carrier body according to one of the preceding claims characterised in that the intake flow end of the catalyst carrier body (1) is on the side of the dividing wall (4) rich is towards the welded seam (6).

## Revendications

1. Corps support pour catalyseur (1), ce corps support étant métallique, de forme alvéolaire (1) et traversable par un fluide, avec un tube enveloppe (2) entourant ce corps, monté dans une ouverture (5) formée dans une paroi de séparation (4) s'étendant approximativement perpendiculairment à la direction d'écoulement du fluide,
caractérisé par le fait que :
(a) le tube enveloppe (2) comporte au moins une saillie (3) qui en fait le tour ;
(b) l'ouverture (5) formée dans la paroi de séparation (4) est à peine plus grande que la dimension extérieure du tube enveloppe (2) dans la région non en saillie de celui-ci ;
(c) l'ouverture (5) formée dans la paroi de séparation (4) est plus petite que la dimension extérieure de la saillie (3) du tube enveloppe ;
(d) la paroi de séparation est ajustée contre la saillie (3) et elle est reliée à la région extérieure de cette dernière par un cordon de soudure qui en fait le tour (6) ou par une pluralité de points de soudure (6).

2. Corps support de catalyseur selon la revendication 1, caractérisé en ce que le corps support de catalyseur (1) présente une section ronde et un diamètre d'environ 3 à 8 cm.

3. Corps support de catalyseur selon la revendication 1 ou 2, caractérisé en ce que le corps support de catalyseur (1) présente une longueur axiale d'environ 3 à 8 cm.

4. Corps support de catalyseur selon la revendication 1, 2 ou 3, caractérisé en ce que la saillie (3) est approximativement située à la même distance des deux faces frontales du corps support de catalyseur (1).

5. Corps support de catalyseur selon la revendication 1, 2 ou 3, caractérisé en ce que la saillie (3) est disposée de façon dissymétrique par rapport aux deux faces frontales du corps support de catalyseur (1), de préférence éloignée d'environ 1 à 4 cm de l'une des faces frontales.

6. Corps support de catalyseur selon l'une des revendications précédentes, caractérisé en ce que le côté d'arrivée de courant du corps support de catalyseur (1) se trouve du côté de la paroi de séparation (4) où est apporté le cordon de soudure (6).
